# EUROPÄISCHE PATENTANMELDUNG

(11) **EP 4 790 082 A1**
(43) Veröffentlichungstag der Anmeldung: **12.08.2026**
(21) Anmeldenummer: 25025003.2
(22) Anmeldetag: 08.02.2025
(51) Int. Cl.: C08J 3/20, C08J 3/22, C08J 5/04, C11D 7/44, C11D 3/37, C11D 3/382, B29C 33/72

(54) **GRASFASER-ENTHALTENE, MECHANISCHE KOMPONENTE EINES REINIGUNGSGRANULATS FÜR VORRICHTUNGEN ZUR KUNSTSTOFFVERARBEITUNG ODER KUNSTSTOFFERSTELLUNG**

(71) Anmelder: Granula Polymer GmbH, 64823 Groß-Umstadt/Heubach (DE)
(72) Erfinder: Langhammer, Eva, 64823 Groß-Umstadt/ Heubach (DE)

(57) **Zusammenfassung**

**Technisches Gebiet:** Die vorliegende Erfindung betrifft eine mechanische Komponente in Reinigungsgranulat, welche für mechanische Reinigungsprozesse in der Kunststoffverarbeitung verwendet wird. Sie beschreibt eine mechanische Komponente, die durch die Verwendung von wenigstens teilweise verholzten Grasfasern eine verbesserte Reinigungsleistung bietet.

**Zusammenfassung der Erfindung:** Die vorliegende Erfindung betrifft eine mechanische Komponente von Reinigungsgranulat, die wenigstens teilweise verholzte Grasfasern umfasst. Die Grasfasern zeichnen sich durch einen Gehalt an Verholzung und an Silikaten aus, die eine mechanische Reinigungswirkung ermöglichen. Gleichzeitig sorgt die weiche Struktur der Cellulosefasern für eine reduzierte Abrasivität, wodurch das Reinigungsgranulat besonders schonend auf Oberflächen wirkt. Ein weiterer Vorteil der Grasfasern liegt in ihrer thermischen Beständigkeit, die sie für Anwendungen bis zu Temperaturen von 200 °C geeignet macht.

## Beschreibung

Naturstoffe, insbesondere Naturfasern stellen eine umweltfreundlichere Alternative zu synthetischen oder mineralischen Reinigungsmaterialien dar, haben jedoch oft Einschränkungen hinsichtlich ihrer Verfügbarkeit, thermischen Beständigkeit und mechanischen Eigenschaften. Die Inhaltsstoffe der mechanischen Komponente sind dahingehend auszuwählen, dass sie ausreichend abrasiv gegenüber Verunreinigungen in den zu reinigenden Vorrichtungen wirken, jedoch nicht abrasiv gegenüber der Vorrichtungsoberfläche und miteinhergehend nicht verschleißfördernd wirken dürfen.

Bei herkömmlichen Reinigungsgranulaten werden häufig abrasive Materialien eingesetzt, die die Maschinenbauteile verschleißen oder zu Beschädigungen führen können (siehe beispielhaft WO 95/17268 A1, US 3,042,622, https://verrus.de/ablagerungheisskanal/#:-:text=Ablagerungen%20im%20Heißkanal%20werden%20zu,den%20h ohen%20Temperaturen%20ausgesetzt%20ist, https://www.ensingerplastics.com/dede/thermoplastische-kunststoffe/modifizierte-kunststoffe/gf-glasfaser-verstaerkt).

Wenigstens teilweise verholzte Grasfasern bieten eine innovative Lösung für diese Herausforderungen. Sie kombinieren die Vorteile von Naturfasern, wie Umweltverträglichkeit und Nachhaltigkeit, mit spezifischen mechanischen Eigenschaften, die durch die enthaltenen Cellulosefasern und Silikate bedingt sind. Insbesondere der Gehalt an Verholzung und Silikat bestimmter Gräser tragen zu einer effektiven Reinigung durch mechanische Wirkung bei, während die weiche Beschaffenheit der Cellulosefasern abrasive Beschädigungen minimiert. Grasfasern zeichnen sich durch ein für die Kunststoffverarbeitung geeignetes Temperaturfenster von bis zu 200 °C aus. Dies ermöglicht den Einsatz des Reinigungsgranulats in einem breiten Spektrum von Verarbeitungsprozessen, ohne dass die Fasern thermisch zersetzt werden.

Der Einsatz von aufgeschlossenen Grasfasern in Kunststoffmaterial ist literaturbekannt (siehe beispielhaft EP2670896B1). Der Einfluss von Silikaten in Gräsern wird hierbei nicht beschrieben. Vielmehr wird die Grasfaser in einem aufwendigen Verfahren (Herstellung einer Suspension, Aufschluss, mehrfache Wiederholungsvorgänge, Trocknung) aufbereitet und resultierende Cellulose-Fasern im weiteren Vorgehen eingesetzt. Begleitstoffe, wie beispielsweise Silikate werden größtenteils abgetrennt. Um faserverstärkte Kunststoffpellets herstellen zu können, muss die Faser während des Aufbereitungsvorgangs mit einem Haftvermittler ausgestattet werden.

Außerdem ist bei dem etablierten Einsatz von aufgeschlossenen Grasfasern in Kunststoffmaterial zu beachten, dass die Grasfaser vor der Aufbereitung eine Trockenmasse von maximal 50% aufweist. Der Einsatz von Grasfasern mit einer höheren Trockenmasse, wie beispielsweise Heu ist für das Vorgehen nicht geeignet, da hier die Grasfasern bereits wenigstens anteilig verholzt vorliegen. Der aufwendige Aufbereitungsschritt der Gräser bis zur Grasfaser für den Einsatz in Kunststoffteilen wird gemäß dem beschriebenen Vorgehen an nicht-verholzten Gräsern durchgeführt. Beim Verholzen wird Lignin in die Zellwände eingelagert, diese werden verstärkt und die Widerstandfähigkeit der Gräser wird erhöht.

Das beschriebene Vorgehen umfasst dabei stehts den Einsatz eines Haftvermittlers, damit die Faser fest an die Kunststoffmatrix angebunden ist. Dies ist nötig, um mechanische Zielwerte des finalen Kunststoffteils erreichen zu können. Das Vorgehen betrifft dabei pauschal sämtliche Gräser im Generellen.

Der gezielte Einsatz von Paludi-Gräsern in Kunststoffmaterial ist nicht literaturbekannt. Der Einsatz von Paludi-Gräsern in der Papierindustrie ist bereits bekannt und etabliert, insbesondere aufgrund der Nachhaltigkeit, da die Gräser in Mooren wachsen und die Wiedervernässung dem Umweltschutz dient.

Aufgabe der vorliegenden Erfindung ist es, eine mechanische Komponente eines Reinigungsgranulats bereitzustellen, das eine zuverlässige Reinigung von Vorrichtungen zur Herstellung oder Verarbeitung von Kunststoffen ermöglicht und dabei nicht abrasiv gegenüber der Vorrichtungsoberfläche wirkt.

Ferner soll die mechanische Komponente Naturfasern umfassen, die einen signifikanten, positiven Einfluss hinsichtlich Nachhaltigkeit und Umweltschutz ausüben. Dies soll durch einen schlanken Herstellungsprozess der Faser mit geringem Wasser- und Ressourcenverbrauch und auf den weitestgehenden Verzicht von Chemikalien wie Haftvermittler zurückgeführt werden. Aufgabe der vorliegenden Erfindung ist es, eine mechanische Komponente eines Reinigungsgranulats bereitzustellen, dass ohne Einsatz von Haftvermittlern auskommt.

Weiterhin ist es wünschenswert, eine mechanische Komponente eines Reinigungsgranulats bereitzustellen, welche aus Gräsern besteht, die in Mooren wachsen und durch deren Kultivierung eine Wiedervernässung landwirtschaftlicher Flächen zu Folge hat.

Die der vorliegenden Erfindung zugrunde liegende Aufgabe wird durch Bereitstellen einer mechanischen Komponente eines Reinigungsgranulats gemäß Anspruch 1 gelöst.

Bevorzugte Weiterbildungen der erfindungsgemäßen mechanischen Komponente eines Reinigungsgranulats sind in den Unteransprüchen 2 bis 11 angegeben.

Eine bevorzugte Weiterbildung des erfindungsgemäßen Verfahrens ist im Unteranspruch 12 angegeben.

Die Aufgabe der Erfindung wird schließlich durch Bereitstellung eines Verfahrens zur Herstellung der erfindungsgemäßen mechanischen Komponente in Reinigungsgranulat gelöst, wobei wenigstens teilweise verholzte Grasfasern, organisches Polymer und optional Additive unter Bereitstellung des erfindungsgemäßen Reinigungsmittels miteinander vermengt werden, wobei die verholzten Grasfasern wenigstens teilweise die Oberfläche der Vorrichtung berühren.

Die Aufgabe der Erfindung wird ferner durch Verwendung einer mechanischen Komponente in Reinigungsgranulat gemäß Anspruch 13 zur Reinigung von Vorrichtungen zur Kunststoffherstellung oder Kunststoffverarbeitung, insbesondere von Extrudern, Spritzgießmaschinen und 3D-Druckmaschinen, gelöst.

Eine bevorzugte Ausführungsform ist in Anspruch 14 bis 17 angegeben.

Es wurde festgestellt, dass die Kombination von maleinsäureanhydrid-gecratteten, aufgeschlossenen Grasfasern in organischem Polymer eine gute Temperaturstabilität bis 200 °C, sowie eine leichte Handhabung, da sie als gebrauchsfertige Granulate erhältlich sind, aufweist.

Es hat sich jedoch gezeigt, dass die Reinigungskraft einer solchen mechanischen Komponente in Reinigungsgranulat gering ist, verglichen mit etablierten mechanischen Komponenten.

Die Erfinder haben nun überraschenderweise herausgefunden, dass eine hervorragende mechanische Komponente in einem Reinigungsgranulat erhalten werden kann, wenn die Grasfaser bereits mindestens teilweise verholzt vorliegt, nicht dahingehend aufgeschlossen und aufbereitet wird, dass die Cellulosefaser von weiteren Bestandteilen getrennt wird und anschließend nicht mit Maleinsäureanhydrid oder anderen Haftvermittlern vorbehandelt und schließlich an das Polymer angebunden wird. Die verholzten Grasfasern verursachen eine effektive Reinigung von kunststoffverarbeitenden Vorrichtungen. Gleichzeitig reduziert die weiche Cellulosefaser die Gefahr von Oberflächenbeschädigungen, was besonders für empfindliche Maschinenteile vorteilhaft ist.

Im Vergleich zu anderen Naturfasern, wie Baumwolle, Holzfasern oder aufbereiteten Grasfasern, bieten verholzte Grasfasern folgende Vorteile:
∘ Höhere mechanische Reinigungswirkung aufgrund der wiederstandfähigen Zellwand.
∘ Geringere Abrasivität durch die weiche, enthaltene Cellulosefaser.
∘ Nachhaltigkeit durch schnelle Erneuerbarkeit und breite Verfügbarkeit von Gräsern.
∘ Höhere Nachhaltigkeit durch reduzierte Aufbereitungsschritte.
∘ Geringer Wasserverbrauch (da keine Suspension hergestellt wird).
∘ Geringer Chemikalieneinsatz (da kein Haftvermittler eingesetzt werden muss).

Gemäß WO 2015/091627 A1 zur Herstellung von Graspap können Gräser folgendermaßen aufbereitet werden: Sie werden gemäht, zerkleinert, gereinigt, geschnitten, gemahlen, gesichtet, gesiebt, befeuchtet und pelletiert.

Erfindungsgemäß eignen sich Grasfasern, die bis zum Siebprozess verarbeitet, jedoch nicht befeuchtet und pelletiert wurden. Gemäß Anspruch 5 kann die Grasfaser während des Aufbereitungsvorgangs vorbehandelt werden, beispielsweise durch Einsatz von Enzymen.

Die Erfindung setzt Grasfasern ein, die aus Gräsern mit einem Gehalt an Verholzung Verholzung gewonnen werden. Auch ein hoher Silikatanteil im Gras unterstützt eine gute Reinigungswirkung. Bevorzugte Gräser umfassen z. B. Bambus, Elefantengras (Miscanthus), Schilfrohr, Moor-Gräser wie etwa Paludi-Gräser und Schachtelhalm. Diese Gräser sind bekannt für ihren hohen Grad an Verholzung der Pflanzenzellwände, wodurch eine verstärkte mechanische Wirkung erzielt wird. Ferner eignen sich Gräser wie Pampasgras, Wald-Zwenke, Hafer wie Strand- oder Glatthafer, Kammgras, Haargras, Blaugras, Pfeifengras, Pampasgras, Reitgras, Bartgras, Zyperngras, Rispengräser, Quecken, Wiesenfuchsschwanz, Rasenschmiele, Wollgras, Schwingel, Dünengras, Schilfe wie Landschilf und Chinaschilf, Rohrglanzgras, Rohrkolben oder Unterarten hiervon.

Ferner eignen sich Getreide wie Weizen, Gerste, Roggen, Hafer, sowie Reis-, Mais- und Rapspflanzen, da diese ebenfalls verholzen (Stroh).

Die lose, getrocknete Grasfaser mit einer Länge unter 2 mm wird gemäß Anspruch 6 mit einer Kunststoffmatrix gemischt und unter Druck und/ oder Temperatureinwirkung zu Pellets, Granulat, Linsen oder in kompaktierte Form gepresst.

Dies kann durch einen Compoundier- oder Pelletier-Prozess oder ein Pressverfahren erfolgen. Je nach Verfahren resultieren Pellets, Granulate, Linsen oder kompakte Formen. Die genannten Prozesse und Verfahren sind literaturbekannt und können beispielhaft in DE 10 2020 006 298 A1 eingesehen werden.

Gemäß Anspruch 7 umfasst die Kunststoffmatrix ein organisches Polymer und/ oder ein Wachs. Als Wachs eignen sich bevorzugt biobasierte und/ oder biologisch abbaubare Wachse, wie zum Beispiel Talg, Bienenwachs, Chinawachs und/ oder pflanzliche Wachse und Fette, sowie tierische Wachse, um die Nachhaltigkeit zu erhöhen. Ferner eignen sich Paraffine, sowie teil- und vollsynthetische Wachse und/ oder Mischungen hieraus.

Gemäß Anspruch 7 umfasst das organische Polymer ein oder mehrere thermoplastische Polymere. Hierfür eignen sich Thermoplaste und thermoplastische Elastomere, wobei sowohl amorphe als auch teilkristalline Thermoplaste geeignet sind.

Als thermoplastische Polymere eignen sich insbesondere Polyolefine, Polyether, Polyester, Polyamide, Polystyrole, Acrylnitril-Butadien-Styrol-Copolymere, Polyoxymethylene, Polycarbonate, Polymethacrylate, Polyisobutylene, Polyisoprene, Polymilchsäure (PLA), Polybutylenadipat-Terephthalat (PBAT), Stärke-Blends, Polyketone, Polyvinylalkohol, Polyimide, Polyphenylenoxide, Polyphenylenamide und/ oder Mischungen und/ oder Copolymere hieraus.

Als thermoplastische Elastomere eignen sich insbesondere thermoplastische Polyamidelastomere, thermoplastische Copolyesterelastomere, thermoplastische Elastomere auf Olefinbasis, vorwiegend PP/EPDM, thermoplastische Styrol-Blockcopolymere, thermoplastische Elastomere auf Urethanbasis oder thermoplastische Vulkanisate. Als Elastomere eignen sich insbesondere Vulkanisate von Naturkautschuk, Silikonkautschuk, Propylkautschuk, Butylkautschuk, und/ oder Styrol-Butadien-Kautschuk, Methyl-Kautschuk, Butadien-Acrylnitril-Kautschuk, Chloropren-Kautschuk, Fluorkautschuk, Epoxid-Kautschuke, Polyether-Amide, Ethylen-Propylen-Copolymer, Polysulfid-Kautschuke, EPDM, Copolymere hieraus und/ oder Mischungen hieraus.

Es ist zu beachten, dass bei der Wahl des organischen Polymers nur solche Polymere geeignet sind, die sich unterhalb von 200 °C verarbeiten lassen, da die Temperaturstabilität der Grasfaser bis 200 °C begrenzt ist. Polymere wie Polyetheretherketone oder Polysulfone erscheinen daher als ungeeignet.

Erfindungsgemäß kann dem vorherigen Schritt neben der Grasfaser weitere mechanische Additive hinzugefügt werden. Hierfür eignen sich Additive wie Aktivkohle, Mineralien oder Silikate, zB. Kieselgel oder Mischungen hieraus. Als Mineralien eignen sich grundsätzlich jegliche Art von mineralischen Partikeln. Beispiele wurden bereits umfangreich in EP2105277B1 aufgeführt. Unter Silikaten verstehen sich neben den bereits genannten Mineralien insbesondere Kieselgel, Glasfasern, Glaskugeln, Glasbruch, Glasmehl, Talk, Kaolinit oder Zeolithe.

Gemäß einer bevorzugten Weiterbildung der Erfindung kann die mechanische Komponente von Reinigungsgranulaten um chemische Additive und/ oder ein Treibmittel und/oder Mischungen hieraus ergänzt werden. Beispiele für chemische Additive und für Treibmittel sind in EP2105277B1 aufgeführt.

Gemäß einer weiteren bevorzugten Weiterbildung der Erfindung kann die mechanische Komponente von Reinigungsgranulaten um grenzflächenaktive Substanzen, wie Emulgatoren, Netzmitteln, Tensiden und/ oder Seifen, sowie Mischungen hieraus ergänzt werden. Hierdurch können Verunreinigungen besser an-, abgelöst und vom Reiniger aufgenommen werden. Beispiele für grenzflächenaktive Substanzen sind in DE 10 2020 006 298 A1 aufgeführt.

Die Patentschrift EP2105277B1 befasst sich mit der Herstellung eines Reinigungsmittels für kunststoffverarbeitende Vorrichtungen, wobei die mineralischen Partikel und/ oder freie kristalline Säure, ein chemisches Additiv, wenigstens teilweise eine Verkapselung aufweisen. Die Verkapselung ist von Nöten, damit das Reinigungsmittel lagerfähig ist. Die Erfinder haben nun überraschenderweise herausgefunden, dass bei einer Substitution von mineralischen Partikeln, die als mechanische Komponente in EP2105277B1 aufgeführt sind, mit Grasfasern der Einsatz einer Verkapselung obsolet ist. Die bevorzugt alkalischen mineralischen Partikel reagieren mit der organischen Säure. Die Grasfaser hingegen reagiert nicht mit der Säure, so dass eine Verkapselung erfindungsgemäß nicht von Nöten ist. Aus diesen Gründen können der mechanischen Komponente bedenkenlos chemische Additive, wie beispielsweise freie organische Säuren, wie sie in EP2105277B1 aufgeführt sind, oder wahlweise auch Treibmittel hinzugefügt werden. Weitere chemische Additive, die sich in Reinigungsmitteln für Kunststoffvorrichtungen eignen, sind anorganische und organische Säuren, Anhydride, Imide, Peroxide, Borate, Amine und Salze.

Selbstverständlich kann in der erfindungsgemäßen mechanischen Komponente in Reinigungsgranulaten auch ein Gemisch verschiedener chemischer und mechanischer Additive und Treibmittel enthalten. Es ist dabei zu beachten, dass die Additive bei Raumtemperatur nicht miteinander reagieren können. Andernfalls empfiehlt sich der Einsatz einer Verkapselung gemäß EP2105277B1.

Die erfindungsgemäße mechanische Komponente in Reinigungsgranulat wird unter Druck- und/ oder Temperaturerhöhung durch die zu reinigende Vorrichtung geführt oder gefördert, wobei der thermoplastische Kunststoff erweicht und die Grasfaser die Oberfläche der zu reinigenden Vorrichtung berührt und diese mechanisch von Verunreinigungen reinigt und diese aus der Vorrichtung befördert. Nach erfolgter Reinigung kann wahlweise die Vorrichtung abgestellt oder die Produktion mit Folgematerial fortgesetzt werden. Der mechanische Reinigungsvorgang bedarf keiner Einwirkzeit.

Gemäß der Erfindung kann die erfindungsgemäße mechanische Komponente in einem Reinigungsgranulat eingesetzt werden, wobei sie wahlweise mit weiterem Trägerpolymer, wahlweise einer chemischen Komponente, wahlweise einer zusätzlichen mechanischen Komponente und/ oder einer treibmittelenthaltenen Komponente zu einem Reinigungsgranulat-Trockenblend gemischt wird. Gemäß einer weiteren Variante der Erfindung kann das Reinigungsgranulat als Compound, Masterbatch/ Konzentrat oder als Trockenblend vorliegen.

Die Erfindung wird nachfolgend anhand von Beispielen anschaulich, die jedoch den Schutzumfang der vorliegenden Anmeldung nicht einschränken.

### Beispiele

### Rezepturbestandteile: Angaben in Gewichtsprozent, in Summe 100 Gewichtsprozent

### Beispiel 1.1: Herstellung einer mechanischen Komponente

Inhaltsstoffe:
- 30 % Polypropylen (PP) als Kunststoffmatrix (Hersteller: Borealis PP RJ377MO)
- 15% Natriumhydrogencarbonat (expandierbares Treibmittel der Firma Dr. Lohmann Diaclean GmbH, Oespeler Kirchweg 10, 44379 Dortmund)
- 50 % Kalziumcarbonat (Hersteller: SCHAEFER KALK GmbH & Co. KG, Precarb 400, Louise-Seher-Str. 6, 65582 Diez)
- 5 % Stearat-beschichtetes Siliziumdioxid (S3 Handel und Dienstleistungen UG (haftungsbeschränkt), Klinkerwerkstraße 9, 32549 Bad Oeynhausen)

### Beispiel 1.2: Herstellung einer mechanischen Komponente

Inhaltsstoffe:
- 80 % Agriplast NFPP 4060 (Hersteller: Biowert Industrie GmbH, Gewerbegebiet Ochsenwiesen, Ochsenwiesenweg 4, 64395 Brensbach/Odw.)
- 15% Natriumhydrogencarbonat (expandierbares Treibmittel der Firma Dr. Lohmann Diaclean GmbH, Oespeler Kirchweg 10, 44379 Dortmund)
- 5 % Stearat-beschichtetes Siliziumdioxid (S3 Handel und Dienstleistungen UG (haftungsbeschränkt), Klinkerwerkstraße 9, 32549 Bad Oeynhausen)

### Beispiel 1.3: Herstellung einer mechanischen Komponente (erfindungsgemäß) Inhaltsstoffe:

- 50 % Polypropylen (PP) als Kunststoffmatrix (Hersteller: Borealis PP RJ377MO)
- 15% Natriumhydrogencarbonat (expandierbares Treibmittel der Firma Dr. Lohmann Diaclean GmbH, Oespeler Kirchweg 10, 44379 Dortmund)
- 30 % getrocknete Grasfaser, Hersteller: Creapaper GmbH, Löhestraße 53
- D - 53773 Hennef)
- 5 % Stearat-beschichtetes Siliziumdioxid (S3 Handel und Dienstleistungen UG (haftungsbeschränkt), Klinkerwerkstraße 9, 32549 Bad Oeynhausen)

### Beispiel 1.4: Herstellung einer mechanischen Komponente (erfindungsgemäß) Inhaltsstoffe:

- 50 % Mjuwax 7700 (Hersteller: ceronas GmbH & Co.KG, Hugo-Wagener-Straße 3, 55481 Kirchberg/Hunsrück, Germany)
- 15% Natriumhydrogencarbonat (expandierbares Treibmittel der Firma Dr. Lohmann Diaclean GmbH, Oespeler Kirchweg 10, 44379 Dortmund)
- 30 % getrocknete Grasfaser (Hersteller: Creapaper GmbH, Löhestraße 53
- D - 53773 Hennef)
- 5 % Stearat-beschichtetes Siliziumdioxid (S3 Handel und Dienstleistungen UG (haftungsbeschränkt), Klinkerwerkstraße 9, 32549 Bad Oeynhausen)

### Beispiel 1.5: Herstellung einer mechanischen Komponente (erfindungsgemäß) Inhaltsstoffe:

- 50 % PLA natur (Anbieter: FKUR Kunststoff GmbH, Siemensring 79, 47877 Willich)
- 15% Natriumhydrogencarbonat (expandierbares Treibmittel der Firma Dr. Lohmann Diaclean GmbH, Oespeler Kirchweg 10, 44379 Dortmund)
- 30 % getrocknete Grasfaser (Hersteller: Biowert Industrie GmbH, Gewerbegebiet Ochsenwiesen, Ochsenwiesenweg 4, 64395 Brensbach/Odw.)
- 5 % Stearat-beschichtetes Siliziumdioxid (S3 Handel und Dienstleistungen UG (haftungsbeschränkt), Klinkerwerkstraße 9, 32549 Bad Oeynhausen)

### Beispiel 1.6: Herstellung einer mechanischen Komponente

Inhaltsstoffe:
- 50 % PLA natur (Anbieter: FKUR Kunststoff GmbH, Siemensring 79, 47877 Willich)
- 15% Natriumhydrogencarbonat (expandierbares Treibmittel der Firma Dr. Lohmann Diaclean GmbH, Oespeler Kirchweg 10, 44379 Dortmund)
- 30 % Holzfaserpulver (Hersteller: JRS Rettenmaier)
- 5 % Talkum (Resinas Castro S. L., Pol. Ind. A Granxa, C/ Cíes 190, 36400 O Porriño, Pontevedra, Spanien)

### Beispiel 2: Granulat-Herstellung mittels Extrusion und Granulierung

Alle Rezepturbestandteile aus Beispiel 1.1, 1.2, 1.3, 1.5 und 1.6 wurden jeweils in einem Henschel-Mischer (HENSCHEL FM-75) vorgemischt und 25 kg der erhaltenen Mischung wurde in den Einzugstrichter eines Doppelschneckenextruders (Werner & Pfleiderer, ZSK 25, Coperion GmbH, Theodorstraße 10, 70469 Stuttgart) gegeben. Die sechs Heizzonen wurden auf 170 °C im Einzug und fünfmal je 190 °C eingestellt. Im Falle der Rezepturbestandteile aus Beispiel 1.5 wurden die sechs Heizzonen auf 150 °C im Einzug und fünfmal je 160 °C eingestellt. Die Schneckenumdrehung wurde mit 10 Umdrehungen pro Minute gestartet und anschließend auf 50 Umdrehungen pro Alle Rezepturbestandteile aus Beispiel 1.4 und 1.5 wurden jeweils in einem Henschel-Mischer (HENSCHEL FM-75) vorgemischt und 5 kg der erhaltenen Mischung wurde in einen Kompaktierer (Pelletpresse PP120b, qteck GmbH, Eckhard Knoop, Auf der Schanze 2, 29303 Bergen) gegeben. Die Kompaktierung der Rezepturbestandteile aus Beispiel 1.4 erfolgte ohne äußere Wärmezufuhr. Die Pelletpresse wurde während des Pelletiervorgangs der Rezepturbestandteile aus Beispiel 1.5 mithilfe eines Heizbands und der Reibungswärme auf eine Temperatur von mindestens 130 °C erhöht (Temperatur schwankt, bedingt durch den Reibungsprozess). Die aus dem Kompaktierer erhaltenen Pellets und Pulver wurden zweimal dem Prozess erneut zugeführt, um schließlich Pellets mit ausreichender Festigkeit zu erhalten.

### Beispiel 4: Einsatz der mechanischen Komponente in Reinigungsgranulat

Die unter Beispiel 2 und 3 erhaltenen, insgesamt 7 verschiedenen, mechanischen Komponenten wurden im Folgenden in Reinigungsgranulat eingesetzt.

### Inhaltsstoffe:

| | Beispiele | | | | | | |
|---|---|---|---|---|---|---|---|
| | 4.1^{v} | 4.2^{v} | 4.3^{e} | 4.4^{e} | 4.5^{e} | 4.6^{e} | 4.7^{e} |
| Mechanisch e Komponent e: | Rezepturbestandteile (in Gew. %) | | | | | | |
| Granulat aus 1.1 | 30 | | | 30 | | | |
| Granulat aus 1.2 | | 100 | | | | | |
| Granulat aus 1.3 | | | 100 | | | | |
| Pellets aus 1.4 | | | | 20 | | | |
| Granulat aus 1.5 | | | | | 100 | | 50 |
| Pellets aus 1.5 | | | | | | 40 | |
| Granulat aus 1.6 | | | | | | 50 | 15 |
| Weitere Bestandteile : | | | | | | | |
| PLA | | | | | | | 30 |
| PP | 60 | | | 38 | | | |
| 10% Zitronensäur e in 90% PBAT | 10 | | | 10 | | 5 | 5 |
| Tensid* | | | | 1 | | 5 | |
| Fließverbes serer* | | | | 1 | | | |

| Darreichung sform | Trockenb lend | Masterb atch/ Konzentr at | Masterb atch/ Konzentr at | Compo und | Masterb atch/ Konzentr at | Compo und | Trockenb lend |
|---|---|---|---|---|---|---|---|
| | 24, 25 | 31, 31 | 22, 21 | 20, 20 | 21, 21 | 18, 19 | 18, 18 |

e: erfindungsgemäß, v: Vergleich/ nicht erfindungsgemäß
*Fließverbesserer: Glycerin (Nr. 806), The Naissance Trading Innovation Company Ltd, Unit 9 Milland Road Industrial Estate Neath, West Glamorgan, SA11 1NJ, United Kingdom)
*Tensid: HOESCH AS 240 T, TEA Lauryl Sulfate 40%, Laurylmyristylsulfat, TEA-Salz 40%, Julius Hoesch, GmbH & Co. KG, Birkesdorfer Str. 5, 52353 Düren

Beispiele 4.2, 4.3 und 4.5 wurden als Masterbatch/ Konzentrat eingesetzt und folglich nicht weiterverarbeitet und direkt für Reinigungszwecke eingesetzt.

Beispiele 4.4 und 4.6 wurden mittels Compoundierung hergestellt. Das Vorgehen war folgendermaßen:
Alle Rezepturbestandteile aus Beispiel 4.4 und 4.6 wurden jeweils in einem Henschel-Mischer (HENSCHEL FM-75) vorgemischt und 5 kg der erhaltenen Mischung wurde mit Hilfe eines Bextruders (Bextruder A BX, Hosokawa Alpine AG, Peter-Doerfler-Str. 13-25, 86199 Augsburg) zu Granulat gepresst.

Beispiele 4.1 und 4.7 wurde als Trockenblend eingesetzt. Hierfür wurden jeweils alle Rezepturbestandteile aus Beispiel 4.1 und 4.7 in einem Henschel-Mischer (HENSCHEL FM-75) für 15 Minuten bei Raumtemperatur gemischt.

Testmethode zur Ermittlung der vergleichenden Reinigungseffizienz:
Die Effizienz der Reinigung wurde an einer Spritzgießmaschine (Allrounder, Hersteller: Arburg, 72290 Loßburg, Deutschland) demonstriert. Die Spritzgießmaschine wurde vor dem Reinigungsversuch mit 1 kg schwarzem Rußbatch (30% Ruß in PP, Hersteller Granula Polymer GmbH) befüllt und das Rußbatch wurde zu Kunststoffteilen, sogenannten Prüfplatten, verarbeitet. Hierdurch wurde die Maschine mit schwarzem Pigment verunreinigt. Anschließend wurde die Maschine jeweils mit 3 kg eines der Reinigungsgranulate aus den Beispielen 4.1 bis 4.7 befüllt und es wurde ohne Einwirkzeit Teile aus dem jeweiligen Reinigungsgranulat produziert. Anschließend wurde die Maschine mit PP befüllt und es wurden erneut Teile produziert. Die Anzahl der Zyklen (Anzahl der gespritzten Prüfplatten) wurde notiert, nach der die Polypropylen-Prüfplatten keine mit dem menschlichen Auge ersichtliche Rußverfärbung aufwies. Jedes Reinigungsgranulat wurde zweimal getestet. Die Anzahl der jeweiligen Zyklen wurde in der vorherigen Tabelle eingetragen.

Die Ergebnisse zeigen, dass ein erfindungsgemäßes Reinigungsgranulat-Konzentrat mit 30% Grasfaseranteil sowohl mit PP als Trägerpolymer (4.3), als auch mit PLA (Beispiel 4.5) eine effiziente Reinigungswirkung mit insgesamt 22 und 21 Zyklen ermöglicht, vergleichbar mit der Reinigungswirkung eines herkömmlichen chemischmechanisch wirkenden Reinigungsgranulats mit 24-25 Zyklen. Das Reinigungsgranulat aus Beispiel 4.2 wies mit 32% Grasfaseranteil zwar ähnliche Anteile an Inhaltsstoffen auf, verglichen mit Beispielen 4.3 und 4.5, zeigte jedoch mit insgesamt 31 Zyklen keine zufriedenstellende Reinigungswirkung auf. Dies wird daraufhin zurückgeführt, dass die in Beispiel 4.2 enthaltene Grasfaser umfangreich aufgeschlossen wurde: Die Cellulosefaser wurde von weiteren Inhaltsstoffen separiert und die Faser wurde vor der Einarbeitung in Polypropylen gemäß EP2670896B1 mit Maleinsäureanhydrid gecraftet, so dass die Faser in Polypropylen angebunden vorliegt.

In allen erfindungsgemäßen Beispielen 4.3 bis 4.7 konnte gezeigt werden, dass die Reinigungseigenschaften der erfindungsgemäßen mechanischen Komponente in Reinigungsmitteln für eine Reinigung von Spritzgussmaschinen überlegen ist.

Auch konnte gezeigt werden, dass die Reinigungswirkung durch Hinzufügung weiterer Bestandteile wie chemische Additive, einer weiteren mechanischen Komponente, Trägerpolymer, Tensiden und Fließverbesserern sowohl bei der Bereitstellung als Trockenblend als auch als Compound weiter optimiert werden kann.

## Patentansprüche

1. Mechanische Komponente eines Reinigungsgranulats,
**dadurch gekennzeichnet,**
**dass** die mechanische Komponente des Reinigungsgranulats Grasfasern umfasst, wobei die Grasfasern in einer Kunststoffmatrix eingebettet sind und die Grasfasern wenigstens teilweise verholzt vorliegen, wobei der Anteil an Grasfasern in einem Bereich von 2 bis 80 Gew.-% und der Anteil an Kunststoffmatrix 20 bis 98 Gew.-% liegt, wobei sich die Gew.-% auf das Gesamtgewicht der mechanischen Komponente des Reinigungsgranulat beziehen und insgesamt 100 Gew.-% ergeben.

2. Mechanische Komponente eines Reinigungsgranulats nach Anspruch 1, **dadurch gekennzeichnet,**
**dass** sie bis zu einer Temperatur von 200 °C thermisch beständig ist.

3. Mechanische Komponente eines Reinigungsgranulats nach einem der vorhergehenden Ansprüche, **dadurch gekennzeichnet,**
**dass** die enthaltenen Grasfasern Längen unter 2,5 mm aufweisen.

4. Mechanische Komponente eines Reinigungsgranulats nach einem der vorhergehenden Ansprüche, **dadurch gekennzeichnet,**
**dass** die enthaltenen Grasfasern getrocknet vorliegen und eine Restfeuchte von maximal 15 Gew.-% aufweisen, wobei sich die Gew.-% auf das Gesamtgewicht der enthaltenen Grasfaser beziehen und insgesamt 100 Gew.-% ergeben.

5. Mechanische Komponente eines Reinigungsgranulats nach einem der vorhergehenden Ansprüche, **dadurch gekennzeichnet,**
**dass** die enthaltenen Grasfasern wahlweise vorbehandelt wurden.

6. Mechanische Komponente eines Reinigungsgranulats nach einem der vorhergehenden Ansprüche, **dadurch gekennzeichnet,**
**dass** die enthaltene Kunststoffmatrix organisches Polymer und/ oder Wachs umfasst.

7. Mechanische Komponente eines Reinigungsgranulats nach einem der vorhergehenden Ansprüche, **dadurch gekennzeichnet,**
**dass** das organische Polymer ein oder mehrere thermoplastische Polymer(e) umfasst.

8. Mechanische Komponente eines Reinigungsgranulats nach einem der vorhergehenden Ansprüche, **dadurch gekennzeichnet,**
**dass** die mechanische Komponente Hitzestabilisatoren und Verarbeitungshilfsmittel umfasst.

9. Mechanische Komponente eines Reinigungsgranulats nach einem der vorhergehenden Ansprüche, **dadurch gekennzeichnet,**
**dass** sie weitere mechanisch wirkende Additive oder Mischungen hieraus enthalten kann.

10. Mechanische Komponente eines Reinigungsgranulats nach einem der vorhergehenden Ansprüche, **dadurch gekennzeichnet,**
**dass** sie weitere Additive, bevorzugt chemisch wirkende Additive und/ oder Treibmittel und/ oder Mischungen hieraus enthält.

11. Mechanische Komponente eines Reinigungsgranulats nach einem der vorhergehenden Ansprüche, **dadurch gekennzeichnet,**
**dass** sie weitere Additive, bevorzugt grenzflächenaktive Substanzen enthält.

12. Verfahren zur Reinigung einer Vorrichtung zur Kunststoffherstellung oder Kunststoffverarbeitung, insbesondere von Extrudern, Spritzgießmaschinen und 3D-Druckmaschinen, mit einem Reinigungsgranulat, wobei das Reinigungsgranulat eine mechanische Komponente umfasst, wobei diese wenigstens teilweise verholzte Grasfasern und organisches Polymer aufweist und unter Druck- und/oder Temperaturerhöhung durch die Vorrichtung geführt wird, so dass die Grasfasern wenigstens teilweise die Oberfläche der Vorrichtung berühren.

13. Verwendung der mechanischen Komponente nach einem der vorhergehenden Ansprüche in Reinigungsgranulat zur Reinigung von Extrudern, Spritzgießmaschinen und 3D-Druckmaschinen.

14. Mechanische Komponente eines Reinigungsgranulats nach einem der vorhergehenden Ansprüche, **dadurch gekennzeichnet,**
**dass** die mechanische Komponente als Pellet, Linse, Granulat oder in kompaktierter Form vorliegt.

15. Verwendung der mechanischen Komponente nach einem der vorhergehenden Ansprüche in Reinigungsgranulat, wobei das Reinigungsgranulat als Compound, Masterbatch/ Konzentrat oder als Trockenblend vorliegt.

16. Verwendung der mechanischen Komponente nach einem der vorhergehenden Ansprüche in Reinigungsgranulat, wobei das Reinigungsgranulat neben der mechanischen Komponente weitere Komponenten, wie eine chemische Komponente, Treibmittel, Additive, grenzflächenaktive Substanzen, Stabilisatoren, Enzyme oder Mischungen hieraus enthalten kann.

17. Verwendung der mechanischen Komponente nach einem der vorhergehenden Ansprüche in Kunststoffmaterial.
Schlussbemerkung: Die vorliegende Erfindung stellt eine umweltfreundliche und funktionale Lösung für Reinigungsgranulate dar, die durch den Einsatz von Grasfasern mit hohem Verholzungsgrad und einem hohen Silikatgehalt eine effektive und zugleich schonende Reinigung von Maschinenoberflächen ermöglicht.

## Geänderte Patentansprüche

### Geänderte Patentansprüche gemäss Regel 137(2) EPÜ.

1. Mechanische Komponente eines Reinigungsgranulats,
**dadurch gekennzeichnet,**
**dass** die mechanische Komponente des Reinigungsgranulats Grasfasern umfasst, wobei die Grasfasern in einer Kunststoffmatrix eingebettet sind und die Grasfasern durch einen Ligninanteil in ihrer Zellstruktur wenigstens teilweise verholzt vorliegen, wobei der Anteil an Grasfasern in einem Bereich von 2 bis 80 Gew.-% und der Anteil an Kunststoffmatrix 20 bis 98 Gew.-% liegt, wobei sich die Gew.-% auf das Gesamtgewicht der mechanischen Komponente des Reinigungsgranulat beziehen und insgesamt 100 Gew.-% ergeben.

2. Mechanische Komponente eines Reinigungsgranulats nach Anspruch 1, **dadurch gekennzeichnet,**
**dass** sie bis zu einer Temperatur von 200 °C thermisch beständig ist.

3. Mechanische Komponente eines Reinigungsgranulats nach einem der vorhergehenden Ansprüche, **dadurch gekennzeichnet,**
**dass** die enthaltenen Grasfasern Längen unter 2,5 mm aufweisen.

4. Mechanische Komponente eines Reinigungsgranulats nach einem der vorhergehenden Ansprüche, **dadurch gekennzeichnet,**
**dass** die enthaltenen Grasfasern getrocknet vorliegen und eine Restfeuchte von maximal 15 Gew.-% aufweisen, wobei sich die Gew.-% auf das Gesamtgewicht der enthaltenen Grasfaser beziehen und insgesamt 100 Gew.-% ergeben.

5. Mechanische Komponente eines Reinigungsgranulats nach einem der vorhergehenden Ansprüche, **dadurch gekennzeichnet,**
**dass** die enthaltenen Grasfasern vorbehandelt wurden.

6. Mechanische Komponente eines Reinigungsgranulats nach einem der vorhergehenden Ansprüche, **dadurch gekennzeichnet,**
**dass** die enthaltene Kunststoffmatrix organisches Polymer und/ oder Wachs umfasst.

7. Mechanische Komponente eines Reinigungsgranulats nach dem vorhergehenden Anspruch 6, **dadurch gekennzeichnet,**
**dass** das organische Polymer ein oder mehrere thermoplastische Polymer(e) umfasst.

8. Mechanische Komponente eines Reinigungsgranulats nach einem der vorhergehenden Ansprüche, **dadurch gekennzeichnet, dass** die mechanische Komponente weiterhin wenigstens ein Additiv umfasst, das ausgewählt ist aus der Gruppe bestehend aus Hitzestabilisatoren, Verarbeitungshilfsmitteln, chemisch wirkenden Additiven, Treibmitteln, grenzflächenaktiven Substanzen und Mischungen hieraus.

9. Mechanische Komponente eines Reinigungsgranulats nach einem der vorhergehenden Ansprüche, **dadurch gekennzeichnet, dass** sie weiterhin mechanisch wirkende Additive oder Mischungen hieraus Umfasst.

10. Verfahren zur Reinigung einer Vorrichtung zur Kunststoffhers oder Kunststoffverarbeitung, insbesondere von Extrudern, Spritzgießmaschinen und 3D-Druckmaschinen, durch Verwendung der mechanischen Komponente nach einem der Ansprüche 1 bis 9, mit einem Reinigungsgranulat, wobei das Reinigungsgranulat eine mechanische Komponente umfasst, wobei diese wenigstens teilweise verholzte Grasfasern und organisches Polymer aufweist und unter Druck- und/oder Temperaturerhöhung durch die Vorrichtung geführt wird, so dass die Grasfasern wenigstens teilweise die Oberfläche der Vorrichtung berühren.

11. Verwendung der mechanischen Komponente nach einem der vorhergehenden Ansprüche 1 bis 9 in Reinigungsgranulat zur Reinigung von Extrudern, Spritzgießmaschinen und 3D-Druckmaschinen.

12. Mechanische Komponente eines Reinigungsgranulats nach einem der vorhergehenden Ansprüche 1 bis 9, **dadurch gekennzeichnet, dass** die mechanische Komponente als Pellet, Linse, Granulat oder in kompaktierter Form vorliegt.

13. Verwendung der mechanischen Komponente nach einem der vorhergehenden Ansprüche 1 bis 9 in Reinigungsgranulat, wobei das Reinigungsgranulat als Compound, Masterbatch/ Konzentrat oder als Trockenblend vorliegt.

14. Verwendung nach Anspruch 13, **dadurch gekennzeichnet, dass** das Reinigungsgranulat weiterhin wenigstens eine Komponente umfasst, die ausgewählt ist aus der Gruppe bestehend aus einer chemischen Komponente, einem Treibmittel, Additiven, grenzflächenaktiven Substanzen, Stabilisatoren, Enzymen und Mischungen hieraus.

15. Verwendung der mechanischen Komponente nach einem der vorhergehenden Ansprüche 1 bis 9 in Kunststoffmaterial.
